# EUROPÄISCHE PATENTSCHRIFT

(11) **EP 1 175 361 B1**
(45) Veröffentlichungstag und Bekanntmachung des Hinweises auf die Patenterteilung: **26.03.2003**
(21) Anmeldenummer: 00931122.6
(22) Anmeldetag: 05.05.2000
(51) Int. Cl.: B65G 47/82, B65G 47/84

(54) **VORRICHTUNG ZUM AUSLEITEN VON GEGENSTÄNDEN AUS EINEM STROM VON SOLCHEN GEGENSTÄNDEN**
DEVICE FOR SINGLING OUT ARTICLES FROM A FLOW OF SUCH ARTICLES
DISPOSITIF DESTINE A ELIMINER DES OBJETS D'UN FLUX D'OBJETS

(30) Priorität: 05.05.1999 DE 29908036 U
(43) Veröffentlichungstag der Anmeldung: 30.01.2002
(73) Patentinhaber: HEUFT SYSTEMTECHNIK GMBH, 56659 Burgbrohl (DE)
(72) Erfinder: HEUFT, Bernhard, D-56659 Burgbrohl (DE); KRISTANDT, Gerd, D-67551 Worms (DE)
(74) Vertreter: Gritschneder, Martin, Dipl.-Phys.
(86) Internationale Anmeldenummer: EP0004039
(87) Internationale Veröffentlichungsnummer: WO00068120

(56) Entgegenhaltungen:
- EP-A- 0 430 320
- DE-U- 9 405 706

## Beschreibung

Die Erfindung betrifft eine Vorrichtung zum Ausleiten von einzelnen Gegenständen aus einem Strom von Gegenständen, die auf einer Transporteinrichtung befördert werden. Die Vorrichtung enthält ein aus- und einfahrbares Ausleitelement, das zeitgenau steuerbar ist, um den auszuleitenden Gegenständen einen Querimpuls zu erteilen, so daß sie quer zur Transportrichtung von der Transporteinrichtung gleiten. Das Ausleitelement wird über ein Getriebe von einer hin- und hergehenden oder -schwingenden Antriebseinrichtung angetrieben, z.B. von einer Kolbenzylinder-Einheit oder einem hin- und herpendelnden Schrittmotor.

Solche Ausleitvorrichtungen werden z.B. zum Aussortieren von fehlerbehafteten Getränkeflaschen oder anderen leeren oder bereits gefüllten Lebensmittelbehältern oder Verpackungen eingesetzt. Die Transporteinrichtungen sind dabei Transportbänder, Gliederkettenförderer oder dergleichen, wobei zwei oder mehr solche Transporteure parallel nebeneinander laufen und die Ausleitvorrichtung die fehlerbehafteten Flaschen oder Behälter von einem ersten Transporteur auf den daneben laufenden oder einen der daneben laufenden Transporteure verschieben soll.

Aus DE-A-36 23 327 sind Ausleitvorrichtungen mit einem Stößel bekannt, der von einem Pneumatikzylinder angetrieben wird. Der Pneumatikzylinder und der Stößel können verschwenkbar sein, so daß sich der Stößel während des Anstoßens der Behälter mit diesen mitbewegt. Dadurch soll vermieden werden, daß der Stößel die Behälter abbremst.

Aus DE-C1-37 34 599 ist eine Ausleitelement in Form eines durch eine Kurvenscheibe angetriebenen Stößels bekannt. Aus DE-A-39 17 541 ist eine Kurvensegmentscheibe zum Antrieb eines Stößels bekannt.

Aus DE-C1-38 32 408 ist es bekannt, den Pneumatikzylinder auf einen Dreickslenker wirken zu lassen, der um eine gehäusefeste Schwenkachse drehbar ist, und dadurch ein den Querimpuls übertragendes Element zu beschleunigen.

Aus DE-C1-37 22 515 sind scheibenförmig, sich drehende Ausleitelemente mit spiralförmigen Ausleitsegmenten auf dem Umfang bekannt. Die Ausleitsegmente können durch Bürsten gebildet werden.

Bei Ausleiteinrichtungen besteht immer die Forderung, einerseits eine möglichst hohe Geschwindigkeit der Transporteinrichtung zuzulassen und anderseits die Gegenstände so sanft auszuleiten, daß nicht die Gefahr eines Umkippens besteht. Sie sollen auch dann zuverlässig funktionieren, wenn die Gegenstände mit geringen Abständen oder unmittelbar aufeinander folgen.

Der Erfindung liegt die Aufgabe zugrunde, höhere Durchsatzraten der Gegenständen zu ermöglichen, ohne daß die Gegenstände umkippen, und geringe Abstände der Gegenstände zuzulassen.

Erfindungsgemäß wird diese Aufgabe dadurch gelöst, daß das Ausleitelement bei einer einzigen Hin- oder Herbewegung oder -schwingung der Antriebseinrichtung eine vollständige Ausfahr- und Einfahrbewegung ausführt.

Ist die Antriebseinrichtung beispielsweise ein Pneumatikzylinder und ist der Kolben bei einem Ausleitvorgang ausgefahren, so fährt er bei dem nächsten Ausleitvorgang wieder ein und umgekehrt. Wenn der Kolben etwa halb aus- bzw. eingefahren ist und praktisch seine maximale Geschwindigkeit hat, befindet sich der Ausleitfinger am Ende seiner Ausschwenk- oder Ausfahrbewegung. Nur die Masse der Getriebeelemente muß abgebremst und für die Zurückbewegung wieder beschleunigt werden. Der Kolben behält dagegen seine Bewegungsrichtung und seine Geschwindigkeit bei.

Ein Vorteil gegenüber einem normalen Pusher, d.h. einem Ausleitelement, das durch den einen Hub des Zylinder ausgefahren wird und durch den anderen Hub wieder eingefahren wird, besteht darin, daß es am Ende der Ausfahrbewegung des Ausleitelements kein Überschwingungen gibt. Durch die Bewegungsenergie der beteiligten Massen zeigt ein Zylinder am Ende eines Hubs dieses Überschwingen. Das Überschwingen des Kolbens überträgt sich auf das Ausleitelement und kann zum Umkippen relativ labiler Gegenstände, wie Flaschen, führen. Ein weiterer Vorteil besteht darin, daß der Kolben nahezu seine maximale Geschwindigkeit hat, wenn das Ausleitelement vollständig ausgefahren ist. Das Ausleitelement fährt dadurch extrem schnell zurück.

Das Getriebe, das die Kolbenbewegung auf das Ausleitelement überträgt, ist vorzugsweise eine Kulissenmechanik, wobei die Kulisse eine gerade Bahn mit einer Welle in der Mitte sein kann. Der Zylinder ist in Längsrichtung der Kulisse angeordnet und das Ende der Kolbenstange treibt einen Kulissenstein oder eine Rolle in der Kulisse. Über einen Lenker wird die Bewegung von dem Kulissenstein auf einen Winkelhebel übertragen. Der Lenker liegt etwa rechtwinklig zur Kulisse und der Winkelhebel wird durch ihn nur um etwa 20° hin und her geschwenkt. Der freie Hebelarm des Winkelhebels ist das Ausleitelement oder der Ausleitfinger. Bei normalen 0,75 l- oder 1 l-Getränkeflaschen ergibt sich dabei ein ausreichender Ausfahrweg von etwa 1 cm. Die Ausfahr- oder Ausschwenkbewegung des Ausleitfingers läßt sich sehr gut mir den Gegebenheiten des Transports und des Ausleitvorganges von Getränkeflaschen vereinbaren. Die Verzögerung durch das Losbrechen des Kolbens und das hohe Übersetzungsverhältnis der Kulissenmechanik führen zu einer zunächst relativ langsamen Beschleunigung. Dies läßt sich durch eine entsprechende Vorsteuerung ausgleichen. Der Ausleitfinger nimmt dann über die Kulissenmechanik an Geschwindigkeit schnell zu, wird wieder abbremst, wenn sich der Kulissenstein am Scheitelpunkt der Welle befindet, und fährt extrem schnell zurück, weil der Zylinder dann seine volle Endgeschwindigkeit erreicht hat. In der Endlage ist ein Überschwingen des Zylinders unschädlich, da dies durch das hohe Übersetzungsverhältnis keine Auswirkung auf den Ausleitfinger hat.

Die Umsetzung eines Ausfahrhubes oder eines Einfahrhubes eines Zylinders in eine vollständige Ausleitbewegung, also die Ausfahrbewegung und die Einfahrbewegung des Ausleitfingers oder sonstigen Ausleitelementes, ist auch mittels einer Scherenmechanik, eines Kniehebels oder eines Kurbelgetriebes möglich.

Der Zylinder kann vertikal nach unten angeordnet werden, was den Vorteil hat, daß der Aufbau sehr platzsparend in der Tiefe ist. Er kann aber auch nach hinten angeordnet worden, so daß die Ausleitvorrichtung sehr flach aufbaut. Wird der Zylinder nach unten angeordnet kann es zu einer kleinen Differenz zwischen Einfahrhub und Ausfahrhub des Zylinders kommen, da bei der Bewegung nach unten die Schwerkraft mitwirkt. Dies kann dadurch vermieden werden, daß man für die beiden Fahrrichtungen Druckluftversorgungen mit unterschiedlichen Drücken bereitstellt. Anstatt einem Fünf/Zweiwegeventil kann die Ansteuerung z.B. durch zwei Drei/Zweiwegeventile über verschiedenen Druckquellen erfolgen. Man kann die Steuerzeiten oder die Fahrtzeit des Zylinders weiterhin beschleunigen, indem man diese Einzelventile nicht direkt in Folge umschaltet, sondern durch ein vorzeitiges Entlüften (Vorsteuerzeit) den Zylinder auf der einen Seite früher entlastet, so daß der Losbrechvorgang beim Anfahren erleichtert wird.

Weiterhin kann man die Fahrgeschwindigkeit des Zylinders dadurch erhöhen, daß man die Steuerventile doppelt vorsieht und direkt auf den Zylinder aufsetzt, so daß die Luftwege kurz gehalten werden. Dies bedeutet, daß sowohl am einen als auch am anderen Zylinderende direkt zwei Magneteventile aufgesetzt sind, die gleichzeitig angesteuert werden und für eine erhöhte Druckluftzufuhr und schnellere Entlüftung sorgen.

Vorzugsweise schwenken der Winkelhebel und der Ausleitfinger um eine horizontale Achse, die etwa parallel zur Transportrichtung liegt, und bewegt sich das Ende des Ausleitfingers beim Ausleiten gleichzeitig von oben nach unten. Dies ist besonders vorteilhaft, da sich die vertikale Kraftkomponente günstig auf die Standfestigkeit der Flaschen auswirkt; die Flaschen werden gleichsam auf die Unterlage gedrückt.

Natürlich kann die Schwenkachse des Ausleitfinger auch in jede andere Richtung gestellt werden, z.B. nach oben, oder mit seitlicher Ausleitung. Insbesondere die Ausleitung durch ein Verschwenken des Ausleitfingers nach oben ist jedoch nicht so stabil und führt zu vermehrtem Umfallen der Flaschen.

Durch ein Stellen der Schwenkachse zur Seite, daß heißt rechtwinklig zur Transportrichtung, erteilt der Ausleitfinger einer Flasche beim Ausleitvorgang eine zusätzliche Geschwindigkeitskomponente, und zwar in Transportrichtung.

Vorzugsweise ist der Winkelhebel so ausgebildet, daß die beiden Hebelarme, von denen der eine mit dem Lenker verbunden ist und der andere, freie Hebelarm der Ausleitfinger ist, im Abstand von einander drehfest auf einer Welle montiert sind. Dadurch kann die gesamte Mechanik aus Zylinder, Kulisse, Lenker und erstem Hebelarm des Winkelhebels in einem Gehäuse gekapselt werden. Auf einer Seite wird lediglich die Welle herausgeführt und am Ende der Welle wird der Ausleitfinger montiert. Durch diese nahezu vollständige Kapselung läßt sich die Ausleitvorrichtung leicht reinigen. Dies ist in Betrieben der Lebensmittelindustrie wichtig. Rein funktionsmäßig wäre es auch möglich, den Ausleitfinger nicht über eine Welle anzutreiben, sondern als Teil einer Schere darzustellen. Dann würde aber die gesamte Mechanik offenliegen und eine Reinigung wäre sehr erschwert.

Bei einem Kniehebelgetriebe wird der Kniehebel zwischen einem gehäusefesten Drehpunkt und und dem Ausleitfinger oder dem Winkelhebel angeordnet und wirkt der Pneumatikzylinder auf das Gelenk des Kniehebels.

Statt eines Pneumatikzylinders kann auch eine Magnetspule mit beweglichem Anker als hin- und hergehende Antriebseinrichtung verwendet werden. Der Anker kann zwischen zwei Magnetspulen hin- und herbewegt werden, wobei die Bewegung ähnlich wie die des Kolbens mittels einer Kulisse oder eines Kniehebels auf das Ausleitelement übertragen wird.

Wird als Antriebseinrichtung ein hin- und herschwingender Schrittmotor eingesetzt, so wird zur Übertragung der Bewegung zweckmäßig ein Kurbelgetriebe eingesetzt.

Mit der erfindungsgemäßen Ausleitvorrichtung kann der Ausleitimpuls auch in der Stärke gesteuert werden, wodurch es ermöglicht wird, die Behälter gezielt auf einen von zwei oder mehr neben dem ursprünglichen Transporteur verlaufende Transporteure zu stoßen. Dazu wird die Steuerung so ausgebildet, daß man die Ventile aus verschiedenen Druckquellen speisen kann, so daß der Zylinder wahlweise z.B. mit 3 oder mit 5 bar betrieben wird, was sich in der Fahrgeschwindigkeit des Kolbens, der Ausfahr- oder Ausschwenkgeschwindigkeit des Ausleitelementes und damit in der Stärke des Ausleitimpulses und in der Ausstoßweite der einzelnen Behälter auswirkt.

Ein Ausführungsbeispiel der Erfindung wird nachfolgend anhand der Zeichnung erläutert. Es zeigen:
- Fig. 1: in einer räumlichen Darstellung drei parallele Transporteure und eine daneben angeordnete Ausleitvorrichtung;
- Fig. 2: bis 6 in einem Vertikalschnitt schematisch verschiedene Stadien des Bewegungsablaufs der Ausleitvorrichtung;
- Fig. 7: das Antriebselement in Form eines Pneumatikzylinder und des von ihm über Hebel angetriebenen Ausleitfingers;
- Fig. 8: in einer Ansicht von oben die Welle, auf der der Ausleitfinger gelagert ist;
- Fig. 9: die Druckluftversorgung des Pneumatikzylinders;
- Fig. 10: eine andere Schaltung der Druckluftversorgung des Pneumatikzylinders;
- Fig. 11: ein Zeitdiagramm der Steuerung;
- Fig. 12: eine Ausführungsform der Ausleitvorrichtung mit Kniehebel zur Bewegungsübertragung und
- Fig. 13: und 14 eine Ausführungsform mit einem Schrittmotor als Antriebseinrichtung.

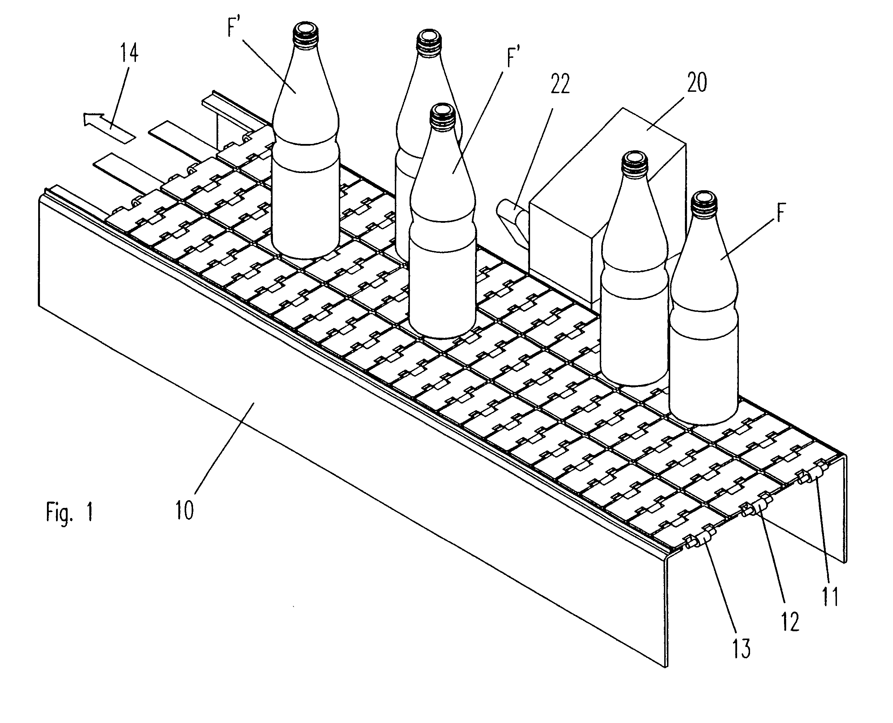

Fig. 1 zeigt einen Abschnitt einer Transportanlage 10 für Getränkeflaschen F. Die Transportanlage 10 besteht aus drei parallel nebeneinander und in der gleichen horizontalen Ebene laufenden Transporteuren 11, 12, 13, die Gliederkettenförderer sind und mit etwa gleicher Geschwindigkeit in Pfeilrichtung 14 laufen. Die Flaschen F werden auf dem rechts liegenden Transporteur 11 herangeführt. Sie sind zuvor von einer nicht dargestellten Inspektionsvorrichtung auf Fremdkörper, fehlerfreie Öffnung, Füllstand oder dergleichen untersucht worden.

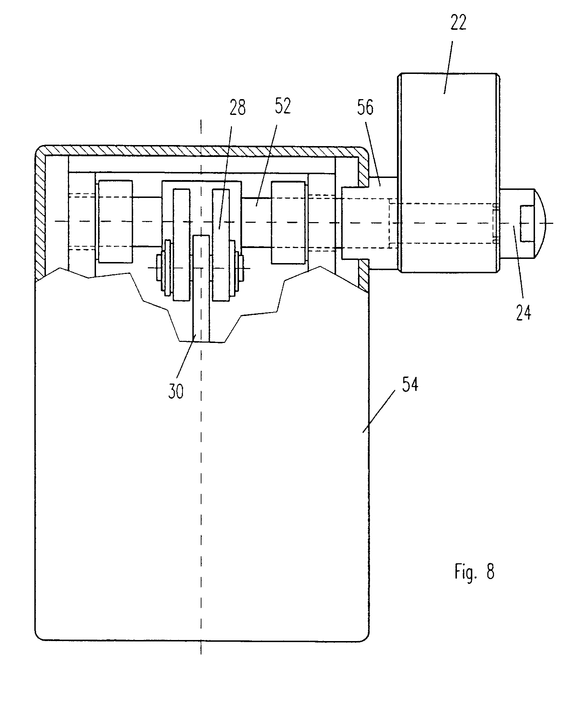

Die als fehlerbehaftet oder nicht ordnungsgemäß erkannten Flaschen F' werden von einer neben der Transportanlage 10 montierten Ausleitvorrichtung 20 von dem rechten Transporteur 11 auf den daneben laufenden mittleren Transporteur 12 geschoben oder gestoßen. Die Ausleitvorrichtung 20 weist dazu einen Ausleitfinger 22 auf, der um eine horizontale Achse 24 (Fig. 8) verschwenkbar ist. Die Achse 24 liegt parallel zu der durch den Pfeil 14 angezeigten Transportrichtung der Transporteure 11, 12, 13. In seiner in Fig. 1 gezeigten Ruhestellung befindet sich der Ausleitfinger 22 außerhalb des Weges der Getränkeflaschen F. Der Ausleitfinger 22 wird von der Inspektionsvorrichtung zeitgenau und unter Berücksichtigung der Transportzeit von der Inspektionsvorrichtung zur Ausleitvorrichtung 20 angesteuert, so daß er zu dem Zeitpunkt verschwenkt, zu dem sich eine als fehlerbehaftete erkannte Getränkeflasche F' vor ihm befindet. Die Schwenkbewegung erfolgt sehr schnell und der Ausleitfinger 22 erteilt der auszuleitenden Getränkeflasche F' nur einen kurzen Stoß oder Bewegungsimpuls, der ausreicht, damit die Getränkeflasche F' von dem rechten Transporteur 11 auf den mittleren Transporteur 12 gleiten. Die Getränkeflaschen F' in Fig. 1 sind auf dies Weise von dem rechten Transporteur 11 auf den mittleren Transporteur 12 gestoßen worden.

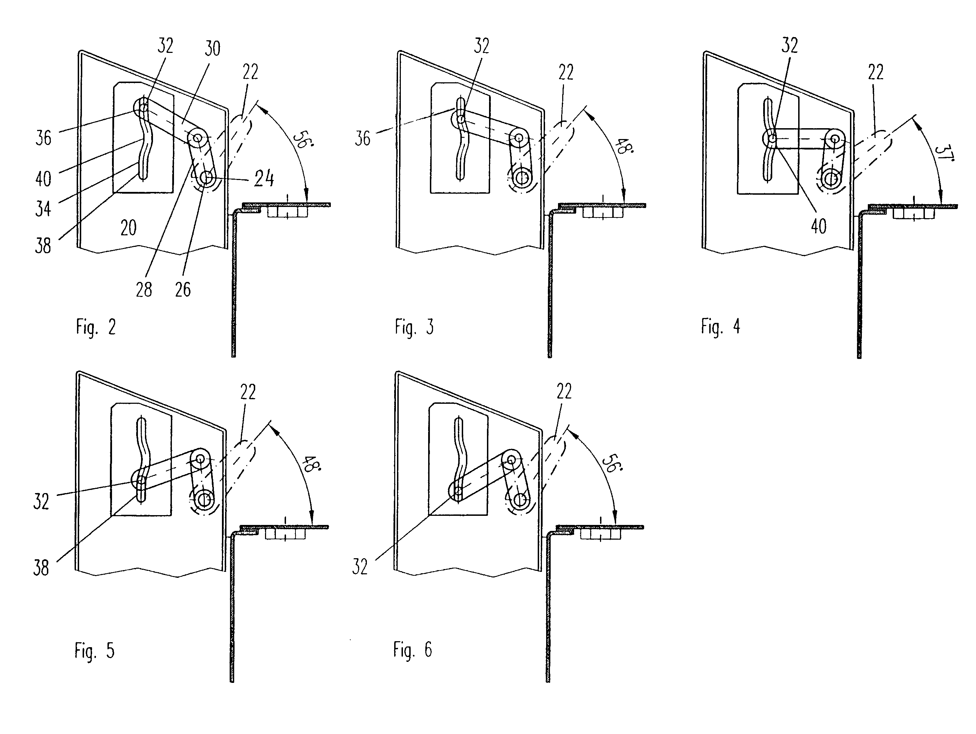

Wie man in Fig. 2 erkennt ist der Ausleitfinger 22 der eine Hebelarm eines Winkelhebels 26, der um die Achse 24 schwenkbar ist. Das Ende des anderen Hebelarms oder Winkelarms 28 ist am vorderen Ende eines Lenkers 30 angelenkt, dessen hinteres Ende mittels eines Kulissensteins 32 in einer Kulisse 34 geführt ist. Der Kulissenstein 32 ist als Rolle ausgeführt. Die Kulisse 34 ist im wesentlichen vertikal ausgerichtet und liegt in einem etwa der Länge des Lenkers 30 entsprechenden Abstand hinter der Achse 24. Die Mitte der Kulisse 34 liegt etwa um die Länge des Winkelarms 28 über der Achse 24. Wenn sich der Kulissenstein 32 in der Mitte der Kulisse 34 befindet, liegt der Lenker 30 etwa horizontal und der Winkelhebel 28 etwa vertikal.

Die Kulisse 34 hat drei Abschnitte. Einen oberen und einen unteren geraden Abschnitt 36 bzw. 38 und einen mittleren Abschnitt, der die Form einer zur Achse 24 gerichteten Welle 40 hat. Bei einer Bewegung des Kulissensteins 32 in der Kulisse 34 von oben nach unten oder von unten nach oben wird dadurch der Winkelhebel 26 und damit auch der Ausleitfinger 22 um einen bestimmten Winkel hin und her geschwenkt. Eine sich zu diesem Zeitpunkt gerade vor dem Ausleitfinger 22 vorbei bewegende Getränkeflasche F' erhält einen Stoß und rutscht durch den erteilten Bewegungsimpuls auf den mittleren Transporteur 12.

Die Figuren 2 bis 6 zeigen im einzelnen, wie durch eine einzige Hubbewegung des Kulissensteins 32 von oben nach unten der Ausleitfinger 22 aus- und eingeschwenkt wird. Solange sich der Kulissenstein 32 im oberen geraden Abschnitt 36 befindet (Fig. 3), bewegt sich der Ausleitfinger 22 relativ langsam aus seiner Anfangsstellung, in der er unter einem Winkel von etwa 56° zur Horizontalen gerichtet, in eine Stellung von 48°. Durch die Weiterbewegung des Kulissensteins 32 auf dem kurzen Weg bis zum Scheitelpunkt der Welle 40 wird der Ausleitfinger 32 dagegen bis zu einer Winkelstellung von etwa 37° gegenüber der Horizontalen ausgeschwenkt (Fig. 4). Nach Überschreiten des Scheitelpunktes der Welle 40 wird der Ausleitfinger 22 zunächst sehr schnell wieder in eine Winkelstellung von etwa 48° zurückgeschwenkt (Fig. 5) und dann während der Bewegung des Kulissensteins 32 in dem unteren geraden Abschnitt 38 langsamer zurück in die Anfangsstellung von 56° (Fig. 6) geschwenkt.

Das Aus- und Einschwenken des Ausleitfingers 22 verläuft etwa spiegelbildlich zur Mitte des Bewegungsverlaufs, in der sich der Kulissenstein 32 im Scheitelpunkt der Welle 40 befindet. Dies bedeutet gleichzeitig, daß die Aus- und Einschwenkbewegung des Ausleitfingers 22 bei einer Bewegung des Kulissensteins 32 von unten nach oben die gleiche ist, wie bei einer Bewegung des Kulissensteins 32 von oben nach unten.

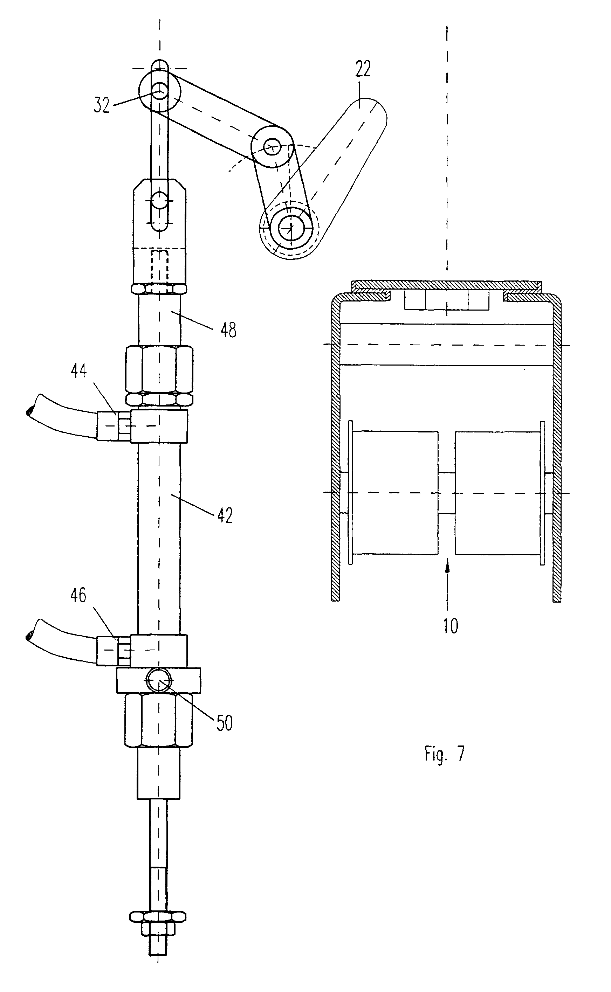

Fig. 7 zeigt einen Pneumatikzylinder 42 für den Antrieb der Ausleitvorrichtung 20. Der Pneumatikzylinder 42 hat einen oberen und unteren Anschluß 44 und 46 für Druckluft, um den Kolben nach unten bzw. oben zu fahren. Eine Kolbenstange 48 ist nach oben aus dem Pneumatikzylinder 42 herausgeführt. Der Kulissenstein 32 ist am Ende einer Kolbenstange 48 angelenkt In Fig. 7 ist die Kulisse 34 nicht eingezeichnet und die Transportanlage 10 ist mit nur einem Transporteur dargestellt. Der Pneumatikzylinder 42 ist am unteren Ende um eine Achse 50 drehbar aufgehängt, so daß er der Position des Kulissensteins 32 folgen kann, wenn dieser die Kulisse 34 durchfährt. Die Achse 50 liegt parallel zur Achse 24 des Winkelhebels 26.

Fig. 8 zeigt in Draufsicht die Lagerung des Winkelhebels 26. Der Ausleitfinger 22 und der Winkelarm 28 sind im Abstand von einander drehfest auf einer Welle 52 montiert. Der Winkelarm 28 ist gegabelt. Die gesamte Ausleitvorrichtung 20 ist in einem geschlossenen Gehäuse 54 untergebracht und nur das Ende der Welle 52 mit dem daran montierten Ausleitfinger 22 ist mittels einer Lagerdurchführung 56 aus dem Gehäuse 54 herausgeführt.

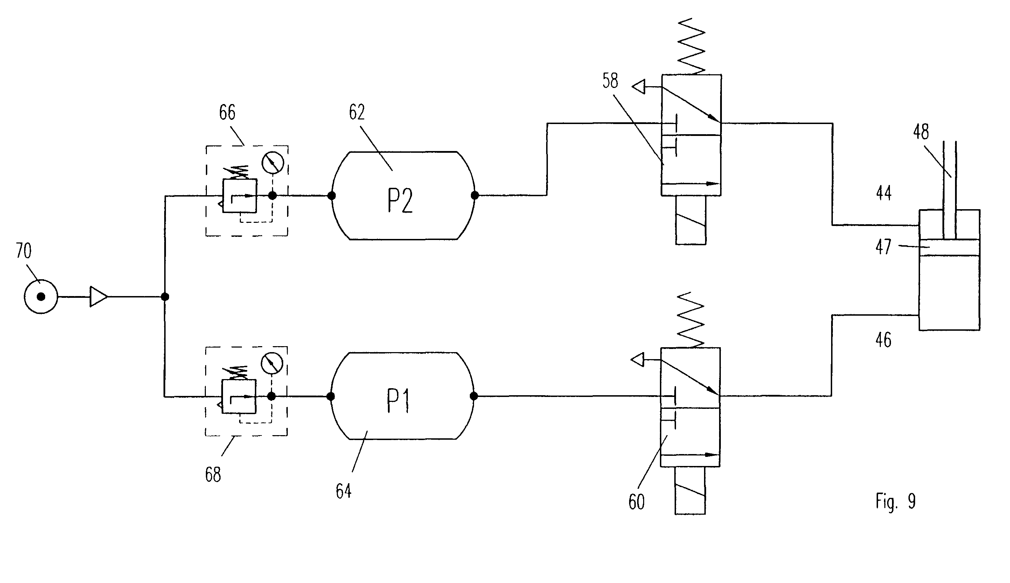

Der Kolben 47 wird durch sein Eigengewicht und das Gewicht der Kolbenstange 48 und des Kulissensteins 32 bei einer Aufwärtsbewegung gebremst und bei einer Abwärtsbewegung beschleunigt. Bei der in Fig. 9 gezeigten Druckluftversorgung sind der obere und der untere Anschluß 44, 46 des Pneumatikzylinders 42 daher über eigene Steuerventile 58, 60 mit getrennten Druckluftspeichern 62, 64 verbunden, die über einstellbare Druckregler 66, 68 von einer gemeinsamen Druckluftquelle 70 mit unterschiedlichen Drücken geladen werden können. Die Steuerventile 58, 60 sind Drei/Zweiwegeventile. Der obere Anschluß 44 wird mit einem Druck von 3 bar und der untere Anschluß mit einem von 3,5 bar gespeist. Die Steuerventile 58, 60 werden magnetisch betätigt und sind direkt auf den Anschlüssen 44, 46 aufgesetzt, um die Reaktionszeit des Pneumatikzylinders 42 zu verkürzen.

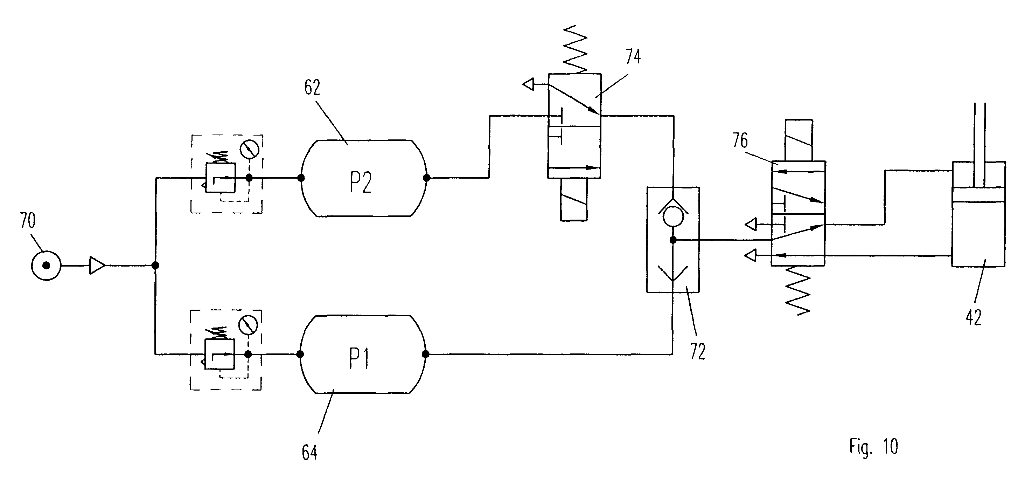

Fig. 10 zeigt eine Schaltung zur Versorgung der beiden Anschlüsse 44, 46 mit unterschiedlichen Drücken. Dadurch kann die Geschwindigkeit des Kolbens 47 gesteuert werden. Über jeden der Anschlüsse 44, 46 kann wahlweise ein Druck von 3 oder 5 bar zugeführt werden. Dazu wird der Druck in den Druckspeichern 62, 64 auf 5 bzw. 3 bar eingestellt und ist ein Ventil 72, das zwei gegeneinander gerichtete Rückschlagventile mit dazwischen liegendem Ausgang enthält, an beide Druckspeicher 62, 64 angeschlossen, das jeweils den höheren Druckwert weiterleitet. Zwischen dem Druckspeicher 62 mit dem höheren Druck von 5 bar und dem Ventil 72 ist ein Steuerventil 74 angeordnet, so daß diese Leitung gesperrt werden kann. Der Ausgang des Ventils 72 ist über ein Umschaltventil 76 zum doppelwirkenden Pneumatikzylinder 42 geführt. Durch das Umschaltventil 76 kann wahlweise eine der beiden Seiten des Pneumatikzylinders 42 druckbeaufschlagt und die jeweils anders Seite belüftet werden.

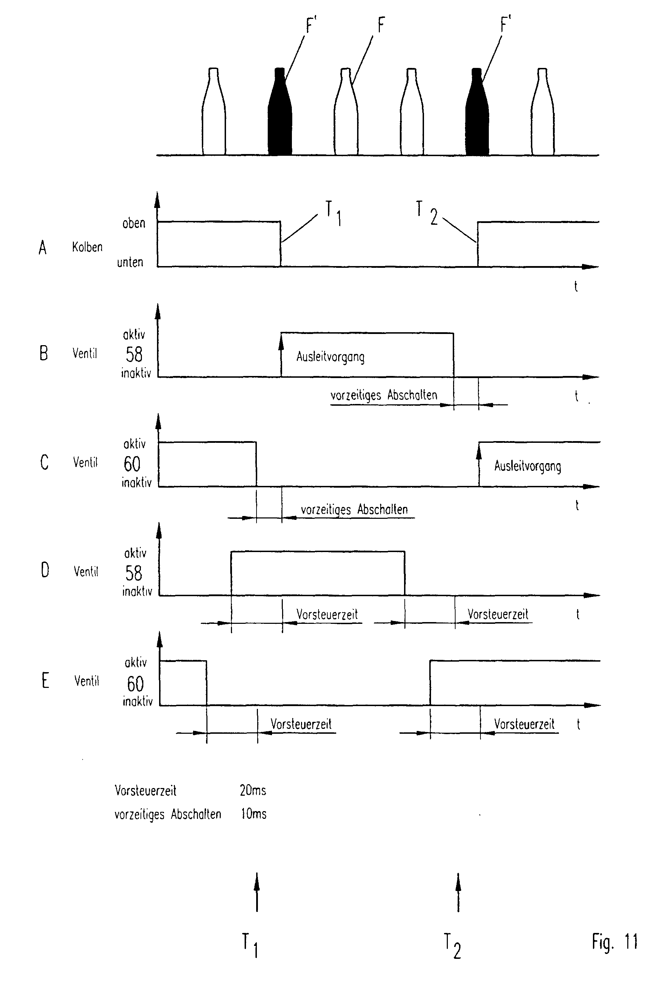

Fig. 11 zeigt das Zeitdiagramm der Steuerung des Pneumatikzylinders 42 bei dem Ausführungsbeispiel von Fig. 9. Die mit weißer Innenfläche dargestellten Flaschen F sind fehlerfrei und sollen auf dem ursprünglichen Transporteur 11 bleiben, während die voll schwarz dargestellten Flaschen F' in einer Inspektionseinrichtung als fehlerbehaftet erkannt wurden und ausgeleitet werden sollen.

Die erste Zeile A zeigt die Stellung des Kolbens 47 und die zweite und die dritte Zeile B bzw. C zeigen den Zustand der ventile 58 bzw. 60. Der Kolben befindet sich am Anfang oben und das erste Steuerventil 58 ist inaktiv, d.h. der Raum über dem Kolben wird belüftet, während das zweite Steuerventil 60 aktiv ist. Zum Zeitpunkt T₁ soll die erste Flasche F' ausgeleitet werden. Bereits etwa 10 ms vor dem Zeitpunkt T₁ wird das zweite Steuerventil 60 inaktiv geschaltet, um die untere Zylinderkammer zu belüften und dadurch das Losbrechen des Kolbens 47 zu erleichtern. Zum Zeitpunkt T₁ wird dann das erste Steuerventil 58 aktiv geschaltet wird, wodurch die obere Zylinderkammer druckbeaufschlagt wird, der Kolben 47 sich nach unten bewegt und der Ausleitfinger 22 aus- und eingefahren wird. Der Schaltzustand der Steuerventile 58, 60 bleibt unverändert bis kurz vor dem Zeitpunkt T₂, zu dem die zweite Flasche F' ausgeleitet werden soll. Etwa 10 ms vor dem Zeitpunkt T₂ wird das erste Steuerventil 58 inaktiv geschaltet, um die obere Zylinderkammer zu belüften und dadurch das Losbrechen des Kolbens 47 zu erleichtern. Zum Zeitpunkt T₂ wird das erste Steuerventil 60 aktiv geschaltet wird, wodurch nunmehr die untere Zylinderkammer druckbeaufschlagt wird, der Kolben 47 sich nach oben bewegt und der Ausleitfinger 22 aus- und eingefahren wird.

Die Zeilen D und E von Fig. 11 zeigen ein Ausführungsbeispiel, bei dem mit einer Vorsteuerzeit von 20 ms gearbeitet wird, um die Ansprechträgheit des Systems auszugleichen. Das zuvor aktive Steuerventil 58 bzw. 60 wird etwa 30 ms vor dem Zeitpunkt T₁ bzw. T₂ inaktiv geschaltet, um die obere bzw. untere Zylinderkammer zu belüften und das andere Steuerventil 60 bzw. 58 wird etwa 20 ms vor dem Zeitpunkt T₁ bzw. T₂ aktiv geschaltet.

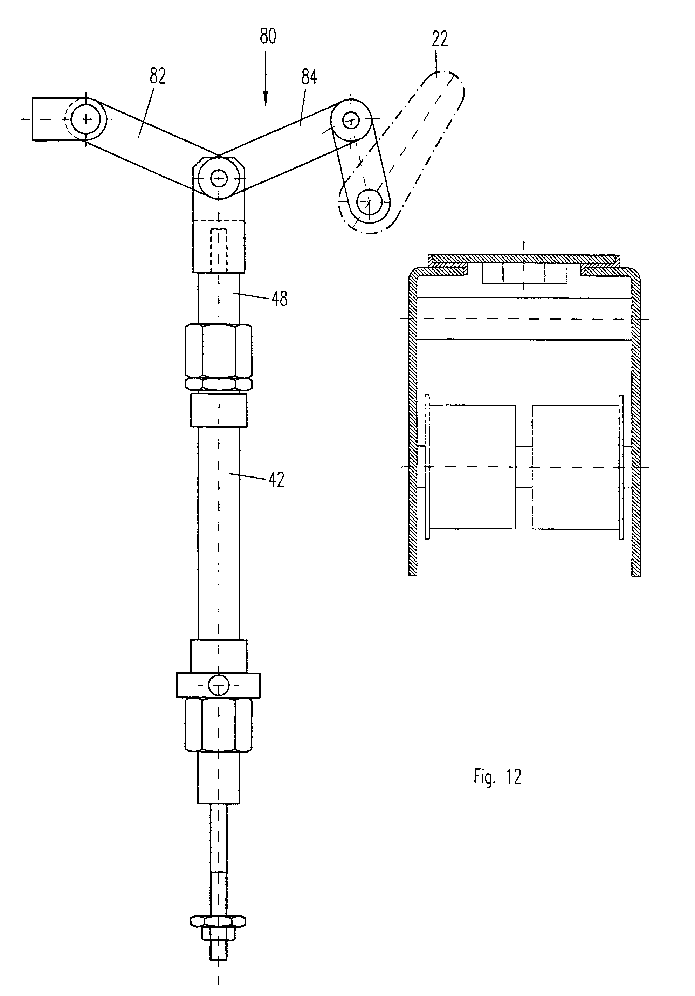

Fig. 12 zeigt ein Ausführungsbeispiel mit einem Kniehebel 80 als Getriebe. Der eine Hebel 82 ist an einem gehäusefesten Punkt angelenkt und der andere Hebel 84 ist an dem Winkelarm 28 angelenkt. Die Kolbenstange 48 des Pneumatikzylinders 42 ist mit dem Gelenk des Kniehebels 80 verbunden. In Fig. 12 ist der Pneumatikzylinder 42 in seiner eingefahrenen Stellung gezeigt. Bei einem Ausfahrhub des Pneumatikzylinder 42 bewegt sich der Kolben 47 aus dieser Stellung nach oben, so daß der Kniehebel 80 gestreckt ist. Der Ausleitfinger 22 hat dann seine vollständig ausgefahrene Position erreicht. Der Kolben 47 wird durch den angelegten Druck weiter nach oben getrieben, bis er seine ober Endlage erreicht hat, in der der Kniehebel 80 den gleichen Winkel, wie in Fig. 12 gezeigt, jedoch nach oben ausgelenkt ist. Der Ausleitfinger 22 ist dann wieder eingefahren. Beim nächsten Ausleitvorgang fährt der Kolben 47 wieder nach unten, wobei der Ausleitfinger 22 dann wieder eine vollständige Ausleitbewegung durchführt, d.h. aus- und einfährt. Der zeitliche Bewegungsablauf des Ausleitfingers 22 ist durch die Kniehebelkinematik zwar weitgehend vorgegeben, durch eine relativ kleine Beschleunigung des Kolbens 47 kann die Ausfahrbewegung des Ausleitfingers 22 jedoch so eingestellt werden, daß die Flaschen auch hier relativ sanft angestoßen und ausgeleitet werden. Die Einfahrbewegung des Ausleitfingers 22 erfolgt sehr schnell, da dann der Kolben 47 seine Maximalgeschwindigkeit erreicht hat.

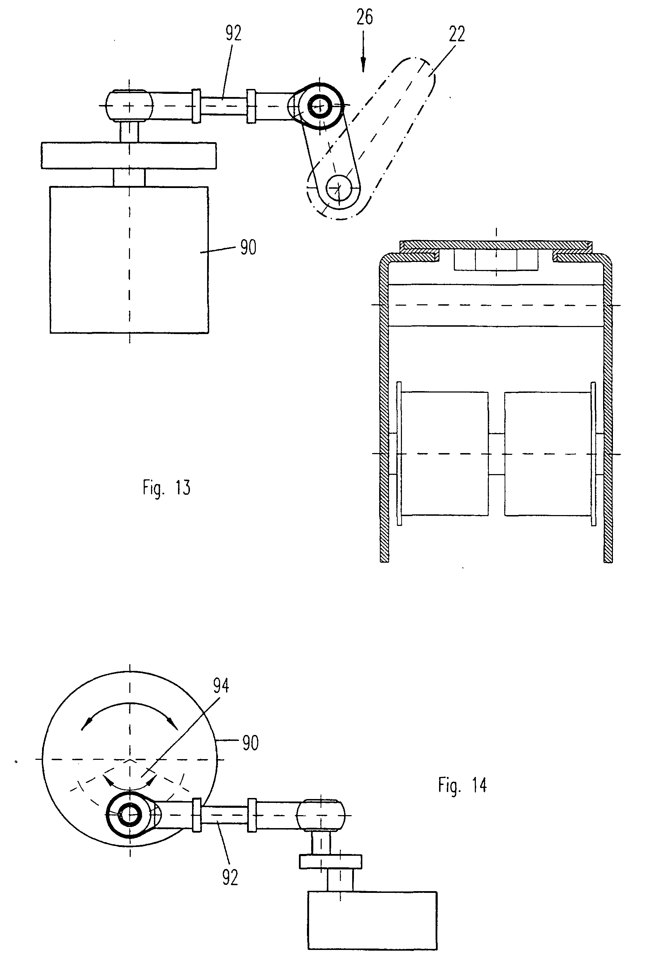

Fig. 13 und 14 zeigen in Seitenansicht bzw. in Draufsicht eine Ausführungsform mit einem Schrittmotor 90 als Antrieb. Der Ausleitfinger 22 ist auch hier Teil des Winkelhebels 26. Der Winkelarm 28 ist mittels eines Universalgelenks mit dem Lenker 30 verbunden, dessen anderes Ende ebenfalls mittels eines Universalgelenks mit einer Kurbel 92 verbunden ist, die auf der Welle des Schrittmotors 90 befestigt ist. Der Schrittmotor 90 wird so gesteuert, daß er sich nur in dem Winkelbereich 94 hin- und herbewegt. In Fig. 13 und 14 durchfährt der Schrittmotor 90 gerade mit hoher Geschwindigkeit die Mittelposition dieses Winkelbereichs 94, so daß der Ausleitfinger 22 seine vollständig ausgefahren Position erreicht hat. Durch die Verwendung eines Schrittmotors läßt sich der Bewegungsablauf des Ausleitfingers 22 exakt und in sehr weiten Grenzen steuern.

### Liste der Bezugszeichen

- 10: Transportanlage
- 11: rechter Transporteur
- 12: mittlerer Transport.
- 13: linker Transporteur
- 14: Pfeil
- 20: Ausleitvorrichtung
- 22: Ausleitfinger
- 24: Achse
- 26: Winkelhebel
- 28: Winkelarm
- 30: Lenker
- 32: Kulissenstein
- 34: Kulisse
- 36: obere Abschnitt
- 38: untere Abschnitt
- 40: Welle
- 42: Pneumatikzylinder
- 44, 46: Anschluß
- 47: Kolben
- 48: Kolbenstange
- 50: Achse
- 52: Welle
- 54: Gehäuse
- 56: Lagerdurchführung
- 58, 60: Steuerventile
- 62, 64: Druckluftspeicher
- 66, 68: Druckregelventile
- 70: Druckluftquelle
- 72: Ventil
- 74: Steuerventil
- 76: Umschaltventil
- 80: Kniehebel
- 82,: 84 Hebelarme
- 90: Schrittmotor
- 92: Kurbel
- 94: Winkelbereich

## Patentansprüche

1. Vorrichtung (20) zum Ausleiten von einzelnen Gegenständen (F') aus einem Strom von Gegenständen (F), die auf einer Transporteinrichtung (10, 11) befördert werden, mit einem aus- und einfahrbaren Ausleitelement (22), das über ein Getriebe (26, 28, 30, 32, 34; 80; 92, 30) von einer hin- und hergehenden oder -schwingenden Antriegseinrichtung (42; 90) angetrieben wird und zeitgenau steuerbar ist, um auszuleitenden Gegenständen (F') einen Querimpuls zu erteilen, so daß sie quer zur Transportrichtung von der Transporteinrichtung (11) gleiten, **dadurch gekennzeichnet,**
- **daß** das Ausleitelement (22) bei einer einzigen Hinbewegung oder Herbewegung oder -schwingung der Antriebseinrichtung (42; 90) eine vollständige Ausfahr- und Einfahrbewegung ausführt.

2. Vorrichtung nach Anspruch 1, **dadurch gekennzeichnet, daß** die hin- und hergehende Antriebseinrichtung ein Pneumatikzylinder (42) ist und daß das Getriebe, das die Kolbenbewegung auf das Ausleitelement (22) überträgt, eine Kulissenmechanik (26, 28, 30, 32, 34) oder ein Kniehebel (80) ist.

3. Vorrichtung nach Anspruch 2, **dadurch gekennzeichnet, daß** die Kulisse (34) eine gerade Bahn mit einer Welle (40) in der Mitte ist.

4. Vorrichtung nach Anspruch 2 oder 3, **dadurch gekennzeichnet, daß** der Zylinder (42) in Längsrichtung der Kulisse (34) bzw. rechtwinklig zum Kniehebel (80) angeordnet ist.

5. Vorrichtung nach einem der Ansprüche 2 bis 4, **dadurch gekennzeichnet, daß** die Bewegung des Kolbens (47) durch das Getriebe auf einen Winkelhebel (26) übertragen wird, dessen freier Hebelarm das Ausleitelement (22) ist.

6. Vorrichtung nach Anspruch 5, **dadurch gekennzeichnet, daß** der Kulissenstein (32) über einen Lenker (30) mit dem Winkelhebel (26) verbunden ist und der Lenker (30) etwa rechtwinklig zur Kulisse (34) liegt.

7. Vorrichtung nach Anspruch 1, **dadurch gekennzeichnet, daß** die Antriebseinrichtung ein hin- und herschwingender Schrittmotor (90) ist, der über ein Kurbelgetriebe (90, 30) mit dem Ausleitelement (22) verbunden ist.

## Claims

1. Device (20) for diverting individual items (F') from a stream of items (F) which are conveyed on a transport apparatus (10, 11), comprising an extendable and retractable diversion element (22), which is operated via a gear unit (26, 28, 30, 32, 34; 80; 92, 30) by a drive apparatus (42; 90) moving or swinging to and fro and is precisely time-controllable, in order to impart a cross impulse to items (F') to be diverted so that they slide from the transport apparatus (11) across the direction of transport, **characterized in that**
- the diversion element (22) carries out a complete extension and retraction movement during a single to-or-fro movement or swing of the drive apparatus (42; 90).

2. Device according to claim 1, **characterized in that** the drive apparatus moving to and fro is a pneumatic cylinder (42) and the gear unit which transmits the piston movement to the diversion element (22) is a slide mechanism (26, 28, 30, 32, 34) or a toggle lever (80).

3. Device according to claim 2, **characterized in that** that the slide (34) is a straight track with a shaft (40) in the centre.

4. Device according to claim 2 or 3, **characterized in that** the cylinder (42) is arranged in longitudinal direction of the slide (34) or across the toggle lever (80).

5. Device according to one of claims 2 to 4, **characterized in that** the movement of the piston (47) is transmitted by the gear unit to a crank lever (26), the free lever arm of which is the diversion element (22).

6. Device according to claim 5, **characterized in that** the sliding block (32) is connected to the crank lever (26) via a push rod (30) and the push rod (30) lies approximately across the slide (34).

7. Device according to claim 1, **characterized in that** the drive apparatus is a stepped motor (90) swinging to and fro which is connected to the diversion element (22) via a crank mechanism (90, 30).

## Revendications

1. Dispositif (20) d'éjection d'objets (F') individuels hors d'un flux d'objets (F) qui sont soumis à un mouvement d'avancement sur un dispositif de transport (10, 11), comprenant un élément d'éjection (22) pouvant être déployé et rétracté, qui est entraîné, par l'intermédiaire d'un mécanisme (26, 28, 30, 32, 34 ; 80 ; 92, 30), par un dispositif d'entraînement (42 ; 90) se déplaçant dans un sens et dans l'autre ou oscillant et qui peut être commandé dune manière précise dans le temps, afin d'impartir une impulsion transversale à des objets (F') devant être éjectés, de sorte qu'ils glissent transversalement à la direction de transport du dispositif de transport (11), **caractérisé**
- **en ce que** l'élément d'éjection (22) exécute, pour un unique mouvement dans un sens ou dans l'autre ou une unique oscillation du dispositif d'entraînement (42 ; 90), un mouvement complet de déploiement et de rétraction.

2. Dispositif suivant la revendication 1, **caractérisé en ce que** le dispositif d'entraînement se déplaçant dans un sens et dans l'autre est un vérin pneumatique (42) et **en ce que** le mécanisme qui transmet le mouvement de piston à l'élément d'éjection (22) et un mécanisme à glissière (26, 28, 30, 32, 34) ou un levier à genouillère (80).

3. Dispositif suivant la revendication 2, **caractérisé en ce que** la glissière (34) est une voie rectiligne comportant une ondulation (40) au milieu.

4. Dispositif suivant la revendication 2 ou 3, **caractérisé en ce que** le vérin (42) est disposé suivant la direction longitudinale de la glissière (34) ou perpendiculairement au levier à genouillère (80).

5. Dispositif suivant l'une des revendications 2 à 4, **caractérisé en ce que** le mouvement du piston (47) est transmis au moyen du mécanisme à un levier coudé (26) dont le bras de levier libre constitue l'élément d'éjection (22).

6. Dispositif suivant la revendication 5, **caractérisé en ce que** le coulisseau (32) est relié par une biellette (30) au levier coudé (26) et la biellette (30) est située approximativement perpendiculairement à la glissière (34).

7. Dispositif suivant la revendication 1, **caractérisé en ce que** le dispositif d'entraînement est un moteur pas-à-pas (90) oscillant dans un sens et dans l'autre qui est relié par un mécanisme à bielle et manivelle (90, 30) à l'élément d'éjection (22).
